# EUROPEAN PATENT APPLICATION

(11) **EP 0 704 152 A1**
(43) Date of publication of application: **03.04.1996**
(21) Application number: 95202611.0
(22) Date of filing: 28.09.1995
(51) Int. Cl.: A01G 9/10, A01G 9/14

(54) **An assembly consisting of a tray and at least one elongated carrying strap, as well as such a tray**

(30) Priority: 28.09.1994 NL 9401587; 05.12.1994 NL 9402039
(71) Applicant: SYNPRODO HORTIPRODUCTS B.V., NL-6603 BM Wijchen (NL)
(72) Inventor: Mortko, Stanislaw A.J., NL-5410 AD Waalwijk (NL); Voogd, Ron, NL-4143 AC Leerdam (NL)
(74) Representative: Fieret, Johannes, Ir.

(57) **Abstract**

An assembly consisting of a tray and at least one elongated carrying strap (30), the ends of which are detachably connected to the tray via recesses provided in the walls of the tray, whereby each recess is a slot (21) extending from an edge of the wall of the tray. The tray of the assembly is suitable for raising plants. At the completion of the raising process the strap (30) is attached to the tray, thus forming the assembly.

## Description

The invention relates to an assembly consisting of a tray and at least one elongated carrying strap, the ends of which are detachably connected to the tray via recesses provided in the walls of the tray.

The invention furthermore relates to such a tray.

Such a tray is for example used for raising plants, whereby the tray comprises a plurality of interconnected compartments, in which balls of cultivating material containing seeds or seedlings are placed. The carrying strap is not connected to the tray during the time that the plants are being raised. When the raising of the plants is completed the carrying strap is attached to the tray, thus forming the assembly, and the tray can be lifted and transported. A similar, known assembly comprises holes provided in two edges of the tray, through which the ends of the carrying strap are passed. The carrying strap is for example provided with lips moving resiliently against spring force, which engage the walls of the hole.

Furthermore a tray having elongated holes is known. The ends of the carrying strap comprise a narrowed portion and a widened portion contiguous thereto. The end is passed through the hole, whereby the direction of the width of the carrying strip is parallel to the longitudinal direction of the hole, whereupon the carrying strap is rotated through 90 °, so that the direction of the width of the carrying strap is perpendicular to the longitudinal direction of the hole and the narrowed portion of the carrying strap is positioned within the hole. The widened portion of the carrying strap engages the walls of the hole in that position.

A drawback of the known assembly is that it is difficult to find the hole in the tray when the tray is filled with raised plants, as a result of which the carrying strap cannot be readily passed through the hole.

The object of the invention is to provide an assembly wherein a carrying strap can be detachably connected to a tray in a simple manner.

This objective is accomplished with an assembly according to the invention, in that each recess is a slot extending from an edge of the wall of the tray.

The carrying strap is simply slipped into the wall of the tray via the slot extending from the edge. Another advantage of the assembly according to the invention is that the carrying strap can also be detached from the tray again in a simple manner. With the known assembly, wherein the ends of the carrying strap are provided with resilient lips, the carrying strap cannot be removed from the holes in the tray, or only with a great deal of difficulty.

One embodiment of the assembly according to the invention is characterized in that one end of the slot facing away from the edge comprises a widened portion.

The ends of a carrying strap, which are provided with a narrowed portion and a widened portion contiguous thereto, are slipped into the slots, whereby the transverse direction of the carrying strap extends parallel to the longitudinal direction of the slot. When the narrowed portion is positioned within the widened portion of the slot, the carrying strap is rotated through 90 °. As a result of this the widened portion of the end of the carrying strap will butt against a side of the tray wall remote from the other part of the carrying strap. Of course the widened portion of the slot will have to be smaller than the widened portion of the end of the carrying strap for this purpose. In this manner the carrying strap is firmly connected to the tray.

A further embodiment of the assembly according to the invention is characterized in that one end of the slot facing the edge comprises a V-shaped widening.

The V-shaped widening forms a guiding element by means of which the input of the carrying strap in the slot has been simplified.

Another embodiment of the assembly according to the invention is characterized in that said recesses are slots extending from the edges of the walls of the tray in a direction towards each other.

Thus a carrying strap can be secured to opposite walls in a simple manner.

Yet another embodiment of an assembly according to the invention is characterized in that said slot extends between two adjacent compartments.

In this way an existing tray comprising compartments can be provided with a slot in a simple manner.

The invention will be explained in more detail hereafter with reference to the drawing.

Figure 1 is a schematic plan view of a part of a first embodiment of a tray according to the invention.

Figure 2 is a view of Figure 1, seen in the direction according to arrow II in Figure 1.

Figure 3 is a view of Figure 1, seen in the direction according to arrow III in Figure 1.

Figure 4 is a schematic plan view of a second embodiment of a tray according to the invention.

Figure 5 shows a part of a carrying strap which is suitable for being secured to the tray shown in Figure 4.

In the Figures like parts are numbered alike.

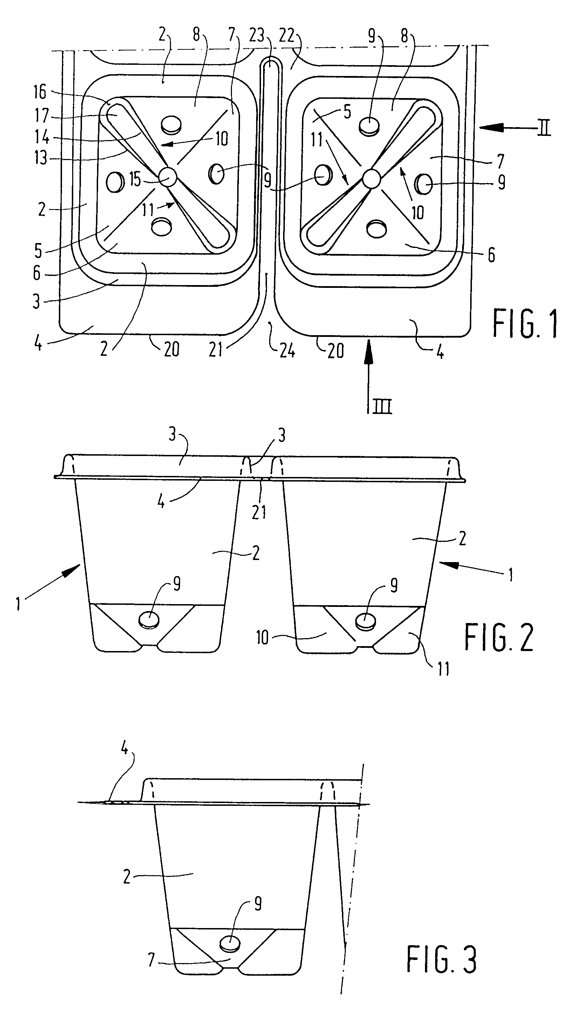

The embodiment of a tray according to the invention shown in Figures 1 - 3 comprises a plurality of compartments 1, which are arranged in side-by-side relationship in two rows. In the illustrated embodiment each compartment comprises two wall parts 2 extending perpendicularly to each other, which wall parts slope upwards, so that the diameter of an compartment gradually increases from the bottom upwards.

At their upper ends the wall parts 2 are connected, via a substantially U-shaped connecting part 3, to a plate-shaped part 4 interconnecting compartments 1.

The bottom part of each compartment 1 is more or less pyramidal and comprises four upwardly sloping wall parts 5 - 8, with a passage 9 being provided in each of said wall parts. The wall parts 5 - 8 include an angle of ± 40 ° with the horizontal.

Two supporting ribs 10 and 11 being in line and extending along a diagonal of the bottom part connect to said bottom part. As will be apparent in particular from Figure 1, each supporting rib is made up of two spaced-apart wall parts 13 and 14, which extend from a passage 15 provided in the centre of the bottom part in the direction of a corner of the compartment, and which are interconnected by a curved wall part 16 at that location. Said wall parts 13 and 14 slope slightly upwards from a bottom surface 17 interconnecting the wall parts at their bottom ends in a direction away from each other.

It will be apparent that as a result of this configuration of the supporting ribs the tray is suitable for being manufactured by a vacuum forming process.

In use the tray will be supported by the bottom surfaces 17 of the supporting ribs, which jointly make up a supporting surface for the tray. It will be apparent that when the tray supported by said supporting surface is disposed in a basin or the like, the passages 9 and 15 located near the bottom side of the compartments will at all times be readily accessible for a liquid and/or air to be passed therethrough into the interior of the various compartments, so that an adequate nutrition and aeration of the roots of the plants to be raised in the tray can be ensured.

As is furthermore apparent from Figure 1, the supporting ribs forming part of compartments located adjacent to each other extend in opposite directions, obliquely to the longitudinal direction and the transverse direction respectively of the tray. This is inter alia conducive to an even transport of the trays over roller conveyors.

The compartments 1 of the tray are interconnected by the plate-shaped part 4 comprising a wall. The plate-shaped part 4 is provided with a slot 21 extending from an edge 20, which slot is positioned between two compartments 1. The slot 21 extends to the segment 22 of the plate-shaped part 4 positioned between four adjacent compartments 1. The end 23 of the slot 21 located in the segment 22 is rounded in order to prevent tearing of the slot 21.

The slot 21 is provided with a V-shaped widening 24 near the edges 20 of the plate-shaped part 4, which facilitates the insertion of the carrying strap into the slot 21.

A carrying strap which is suitable for being used with the tray shown in Figure 1 - 3 must have a narrowed portion near its ends, which fits into the slot 21 between the connecting parts 3, whilst at its ends said strap must have a widened portion, which will abut against the bottom side of the plate-shaped part 4 after the carrying strap has been inserted. Carrying straps of this type are known and are commercially available.

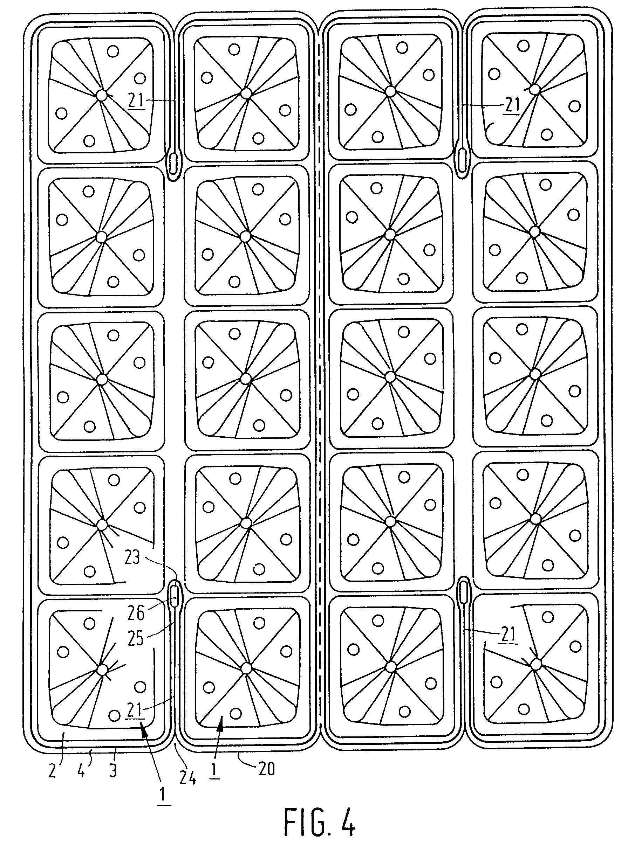

Figure 4 shows a second embodiment of a tray according to the invention. The tray is provided with compartments 1 corresponding with the compartments shown in Figures 1 - 3. The plate-shaped part 4 is provided with a slot 21 consisting of an elongated, relatively narrow slot 25 and a hole 26 located at one end of said slot 25. One end of the slot 21 located near the edge 20 is provided with a V-shaped widening 24.

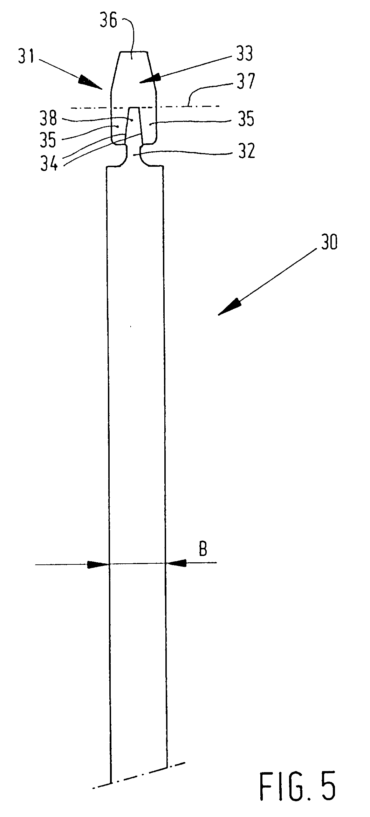

Figure 5 shows a part of a carrying strap 30, which is suitable for being used with the tray shown in Figure 4. The carrying strap 30 is made of a flexible, pliant plastic material. The carrying strap 30 has a width B of about 1 cm and a thickness D (transversely to the plane of the drawing of 1 mm. The length of the carrying strap (transversely to the directions of its width and its thickness) depends on the distance between two slots 21 facing each other, in which the two ends 31 of the carrying strap are fitted.

Each end 31 of the carrying strap 30 is provided with a narrowed portion 32 and a widened portion 33. Cuts 34 are formed in said widened portion 33, thus forming lips 35. The lips 35 and an end portion 36 of the widened portion 33 can pivot about a line 37 with respect to a part 38 of the widened portion 33 connected to the narrowed portion 32.

Now the insertion of the carrying strap will be briefly discussed.

One end 31 of the carrying strap 30 is positioned in front of the V-shaped widening 24 of the slot 21. The carrying strap is slipped into the slot 25 in transverse direction, that is, with the direction of its width B parallel to the longitudinal direction of the slot, until the narrowed portion 32 of the carrying strap 30 is positioned within the hole 27 of the slot 21. Then the carrying strap 30 will be rotated through 90 ° and the widened portion 33 of the carrying strap will be pulled against the bottom side of the plate-shaped part 4, whereby the lips 35 and the end portion 36 will pivot about the line 37. In this manner the carrying strap is firmly connected to the tray. If it is desired to detach the carrying strap 30 the carrying strap is rotated through 90 °, after which the carrying strap can be slipped out of the slot. Inserting the carrying strap 30 is very simple, also if the compartments are filled with plants. The entry of the slot must be traced along the edge of the tray, whereupon the carrying strap can be slipped into the slot and be secured. Finding the slot is facilitated when the slot is provided with a V-shaped recess near its edge.

## Claims

1. An assembly consisting of a tray and at least one elongated carrying strap, the ends of which are detachably connected to the tray via recesses provided in the walls of the tray, characterized in that each recess is a slot extending from an edge of the wall of the tray.

2. An assembly according to claim 1, characterized in that one end of the slot facing the edge comprises a widening.

3. An assembly according to claim 1 or 2, characterized in that one end of the slot facing the edge comprises a V-shaped widening.

4. An assembly according to any one of the preceding claims, characterized in that said recesses are slots extending from the edges of the walls of the tray in a direction towards each other.

5. An assembly according to any one of the preceding claims, wherein the tray comprises a plurality of interconnected compartments, characterized in that said slot extends between two adjacent compartments.

6. A tray according to any one of the preceding claims.
